# EUROPEAN PATENT SPECIFICATION

(11) **EP 3 696 099 B1**
(45) Date of publication and mention of the grant of the patent: **20.10.2021**
(21) Application number: 20000023.0
(22) Date of filing: 16.01.2020
(51) Int. Cl.: B65B 11/04, G01G 15/00, G01G 17/00, G01G 19/00

(54) **WEIGHING DEVICE FOR OPEN TABLE PALLET WRAPPING MACHINES**
WIEGEVORRICHTUNG FÜR PALETTENWICKELMASCHINEN MIT OFFENEM TISCH
DISPOSITIF DE PESAGE POUR MACHINES D'EMBALLAGE DE PALETTES À TABLE OUVERTE

(30) Priority: 15.02.2019 IT 201900002247
(43) Date of publication of application: 19.08.2020
(73) Proprietor: C&C Group S.r.l., 47521 Cesena (FC) (IT)
(72) Inventor: Casadei, Claudio, 47521 Cesena (FC) (IT)
(74) Representative: Montebelli, Marco

(56) References cited:
- EP-A1- 0 205 909
- EP-B1- 0 386 097
- US-A1- 2008 078 588
- US-A1- 2011 198 792
- US-A1- 2012 175 170
- US-A1- 2017 361 955

## Description

This invention relates to a weighing device for open table pallet wrapping machines. Weighing devices in wrapping machines are for instance described in EP 0386097 B1, EP 0205909 A1, US 2012/175170 A1 and US 2008/078588 A1. Wrapping machines are described for instance in US 2011/198792 A1 and US 2017/361955 A1.

In the sector of machines for wrapping pallets with plastic film, and in particular for those defined as being of the "turntable" type (in which the table which supports the pallet turns, whilst the plastic film dispenser remains stationary), a problem which is not easy to solve is that of weighing the pallet.

Turntable type machines may be made with a "closed table", that is to say, in which the turntable has a substantially circular surface with a continuous circumferential edge; or they may be made with an "open table", that is to say, with an irregular peripheral edge, in other words shaped to allow the entry of socalled "pallet trucks", a kind of trolley with forks, suitable for lifting and transporting the pallets.

Whilst in open table machines, the edge of the table is shaped to match the forks of the pallet truck and allows the pallet to be easily transported into the position in which it will then be wrapped with the plastic film, in closed table machines the positioning of the pallet requires some additional care: indeed, the height at which the table is located prevents the pallet truck from positioning the pallet directly at the point where it will be wrapped with the plastic film.

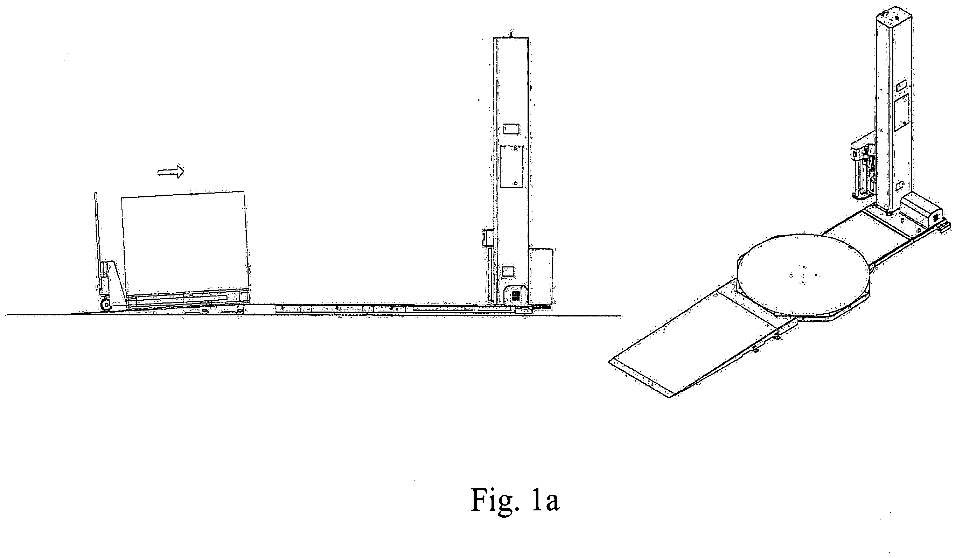

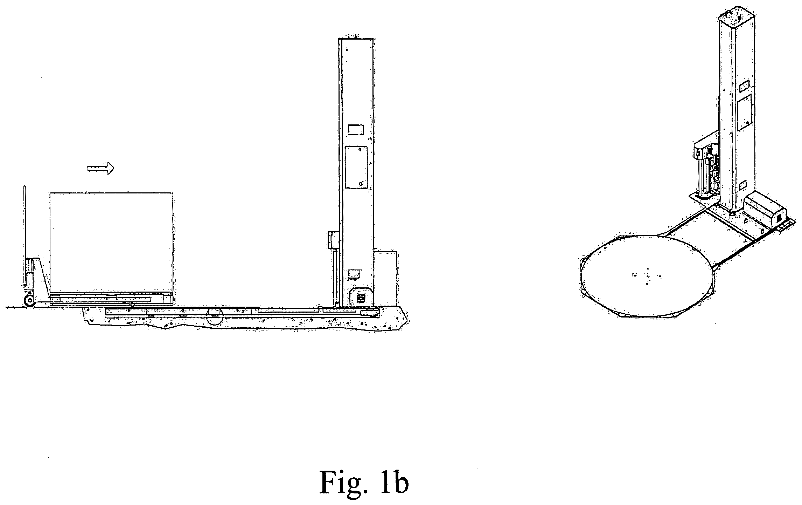

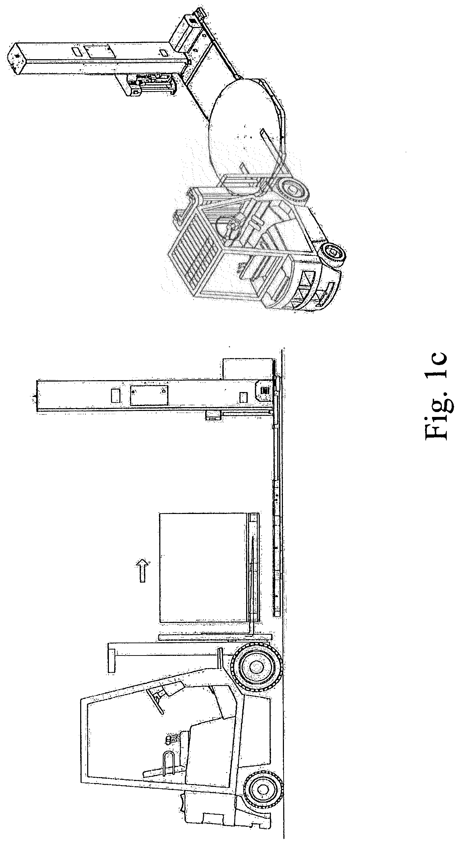

In this case, the aim of correct positioning of the pallet on the turntable is achieved in various ways: as shown in Figure la, an access ramp may be positioned adjacent to the turntable so as to allow the pallet truck to go up onto the ramp and deposit the pallet on the table; another solution, shown in Figure 1b, is constituted of making a hole in the floor, its depth approximately equal to the height of the table, in which to place the pallet wrapping machine; finally, the pallet may be moved by a fork-lift truck which also allows it to be lifted along a vertical line, as shown in Figure 1c.

In all of the cases described above, weighing occurs thanks to a plurality of load cells which are distributed below the entire machine and above all are located below the turntable and below the column. The machine is in a raised position due to the thickness of the load cells themselves, which are calibrated to take into account the weight of the entire machine which rests on them even in the absence of the pallet. Therefore, it is the presence of the load cells which makes it obligatory to raise the entire machine and to use the solutions described above in order to bring the pallet into the position for weighing and wrapping.

In open table machines, the pallet truck can insert its forks into the shaped recesses of the table and bring the pallet into the wrapping position, without the need for the ramp or hole: however, the fact that the turntable is close to the ground does not allow enough space to place the load cells below the machine, therefore in this case there are no known suitable solutions for weighing the pallet. Indeed, in these machines, the turntable is moved by friction, since it is evident that the shape of the recesses prevents the use of belt or chain motion transfer mechanisms: therefore, the load cells should be positioned below the pallet and they should also move together with the table. In this situation, the problem of getting the data detected by the load cells out of the machine is unsolved.

The invention, as characterised in the claims, achieves the aim thanks to the fact that the load cells are inserted in the thickness of the turntable, and the data detected are transferred by means of sliding contacts.

The main advantage of this invention is basically the fact that it allows the pallet to be weighed even with an open table, without the need for further operations on the structures surrounding the pallet wrapping machine, which are typical when operating with a closed table, such as the use of ramps or the digging of holes. Further advantages and features of the invention will be more apparent in the detailed description which follows, with reference to the accompanying drawings, which illustrate an example of it without limiting the scope of the invention, in which:
- Figures la, 1b, 1c illustrate a set of solutions relative to the prior art in the sector, according to perspective top views and according to side views;

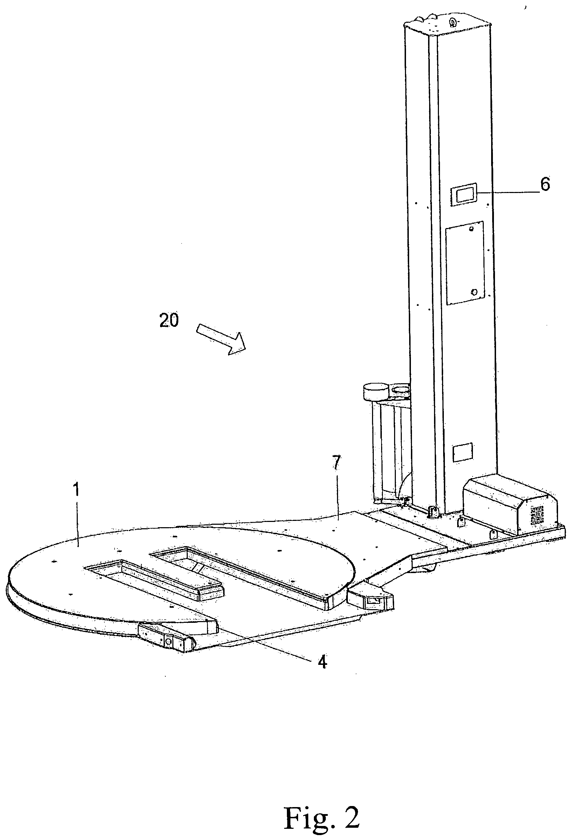

- Figure 2 is a perspective assembly view of the invention;
- Figure 3 is a side view and a top plan view of the invention;
- Figure 4 is an exploded view of the invention;

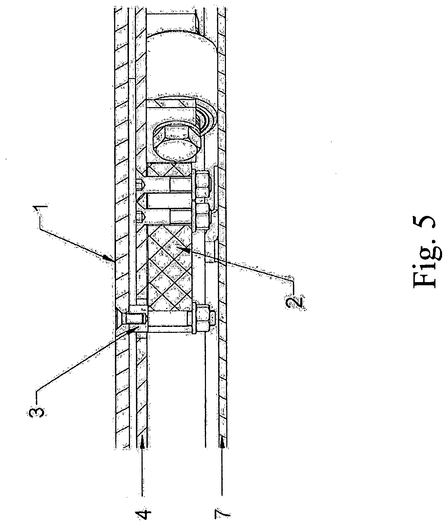

- Figure 5 is a longitudinal section of the invention, with some parts cut away to better illustrate others.

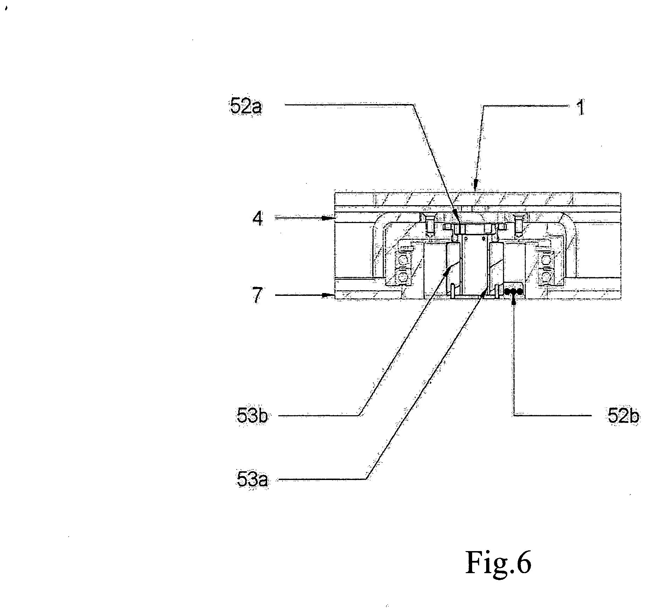

- Figure 6 illustrates the invention according to the cross-section VI - VI of Figure 3;
- Figure 7 illustrates the invention according to the cross-section VII - VII of Figure 3.

As shown in the figures, the invention relates to a weighing device for open table pallet wrapping machines, comprising a fixed frame 7, an open turntable 4, a floating table 1, superposable on the open turntable 4 and vertically movable relative to it, a plurality of load cells 2 fixed to the open turntable 4, and rigid constraining means 3 which are interposed between the floating table 1 and the load cells 2, in which the constraining means 3, preferably constituted of screws 31, suitable for engaging in the floating table 1 and for being fixed to the load cells 2, do not interfere with the open turntable 4, the turntable 4 being equipped with through holes.

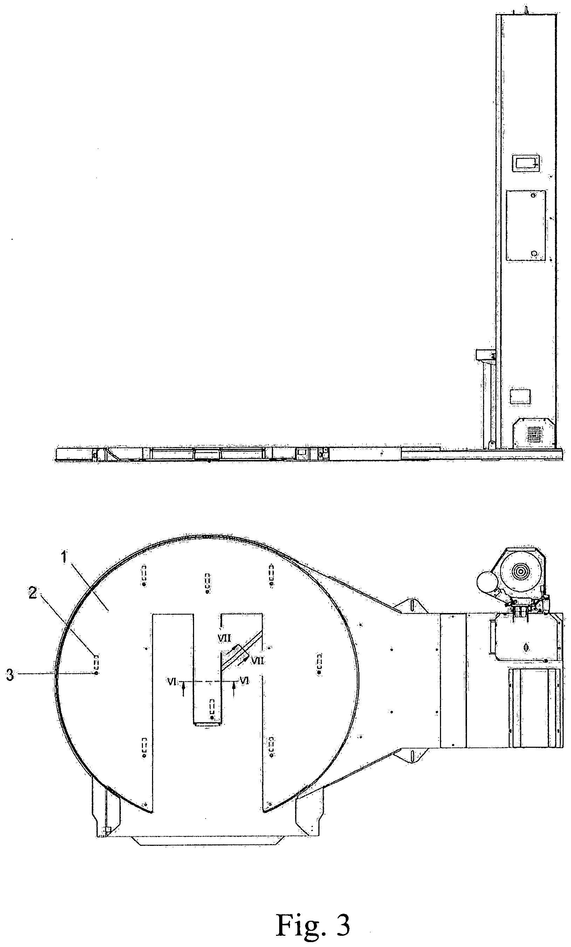

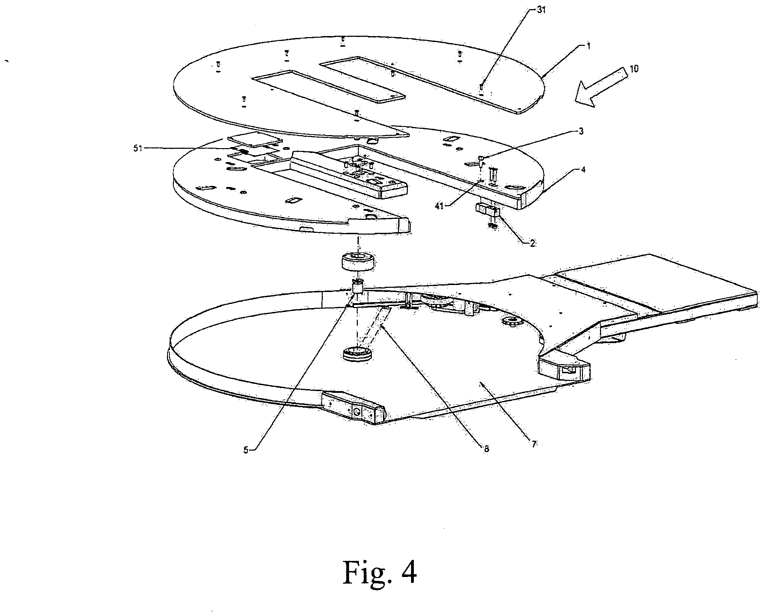

When the pallet is deposited on the floating table 1, the load cells 2 rigidly constrained to the floating table 1 are subject to bending which is measured and matched to the weight of a portion of the pallet: in the example illustrated in the figures, the load cells 2 are uniformly distributed inside the thickness of the turntable 4, as shown in Figures 3 and 4.

The weighing device 10 also comprises data transfer means 5 for transferring the data detected by the load cells 2 to a display apparatus 6, for example a monitor incorporated in the frame 7 of the pallet wrapping machine 20.

The data transfer means 5 for transferring the data detected by the load cells 2 comprise a circuit board 51, defined as a "sum board", suitable for collecting the data detected by the load cells 2 and supplying a pallet total weight value, a slip ring 53, composed of a movable cylinder 53a fixed to the turntable 4 and of a fixed cylinder 53b fixed to the frame 7 which have contact surfaces suitable for exchanging data by sliding, a first set of electric cables 52a, suitable for connecting the board 51 to the movable cylinder 53a of the slip ring 53 and a second set of electric cables 52b, suitable for connecting the fixed cylinder 53b of the slip ring 53 to the display apparatus 6.

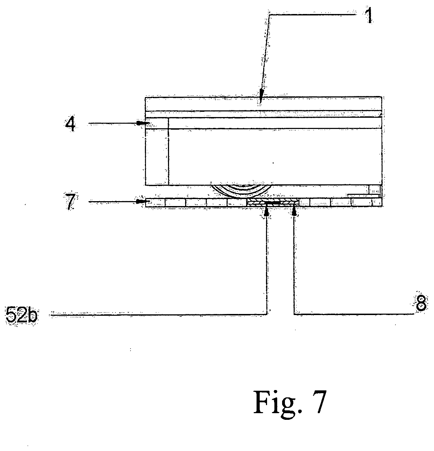

A wireway 8 for containing the second set of electric cables 52b, having extremely compact dimensions and visible in Figures 4 and 7 is housed in the few millimetres of thickness of the frame 7, below the turntable 4.

## Claims

1. A weighing device for open table pallet wrapping machines, which are equipped with a fixed frame (7) and an open turntable (4), **characterised in that** it comprises a floating table (1), superposable on the open turntable (4) and vertically movable relative to it, a plurality of load cells (2) fixed to the open turntable (4), and rigid constraining means (3) interposed between the floating table (1) and the load cells (2), in which the constraining means (3), suitable for engaging in the floating table (1) and for being fixed to the load cells (2), do not interfere with the open turntable (4), the turntable (4) being equipped with through holes.

2. The device according to claim 1, **characterised in that** the constraining means (3) comprise screws (31).

3. The device according to claim 1 or 2, **characterised in that** it comprises data transfer means (5) for transferring the data detected by the load cells (2) to a display apparatus (6).

4. The device according to claim 3, **characterised in that** the data transfer means (5) for transferring the data detected by the load cells (2) comprise a circuit board (51), suitable for collecting the data detected by the load cells (2) and supplying a pallet weight value, a slip ring (53), composed of a movable cylinder (53a) fixed to the turntable (4) and of a fixed cylinder (53b) fixed to the frame (7) which have contact surfaces suitable for exchanging data by sliding, a first set of electric cables (52a), suitable for connecting the board (51) to the slip ring (53), a second set of electric cables (52b), suitable for connecting the slip ring (53) to the display apparatus (6).

5. The device according to claim 4, **characterised in that** it comprises a wireway (8) for containing the second set of electric cables (52b), housed in the frame (7) below the turntable (4).

## Patentansprüche

1. Eine Wiegevorrichtung für Palettenwickelmaschinen mit offenem Tisch, die mit einem festen Rahmen (7) und einem offenen Drehtisch (4) ausgestattet sind, **gekennzeichnet dadurch, dass** sie einen schwimmend gelagerten Tisch (1) beinhaltet, der über dem offenen Drehtisch (4) angebracht werden kann und im Verhältnis zu diesem vertikal beweglich ist, eine Mehrzahl von Lastzellen (2), die am offenen Drehtisch (4) befestigt sind, und steife Festhaltemittel (3), die zwischen dem schwimmend gelagerten Tisch (1) und den Lastzellen (2) angebracht sind, wobei die Festhaltemittel (3), die sich dazu eignen, in den schwimmend gelagerten Tisch (1) einzurasten und an den Lastzellen (2) befestigt zu werden, nicht mit dem offenen Drehtisch (4) in Berührung kommen, da der offene Drehtisch (4) mit durchgehenden Öffnungen ausgestattet ist.

2. Die Vorrichtung nach dem Patentanspruch 1, **gekennzeichnet dadurch, dass** die Festhaltemittel (3) Schrauben (31) beinhalten.

3. Die Vorrichtung nach dem Patentanspruch 1 oder 2, **gekennzeichnet dadurch, dass** sie Datenübertragungsmittel (5) beinhaltet, um die Daten, die von den Lastzellen (2) erfasst werden, an eine Anzeigevorrichtung (6) zu übertragen.

4. Die Vorrichtung nach dem Patentanspruch 3, **gekennzeichnet dadurch, dass** die Datenübertragungsmittel (5) zur Übertragung der von den Lastzellen (2) erfassten Daten eine Platine (51), die sich dazu eignet, die Daten, die von den Lastzellen (2) erfasst wurden und einen Gewichtswert der Palette liefern, zu sammeln, einen Schleifring (53), der aus einem beweglichen Zylinder (53a), der am Drehtisch (4) befestigt ist, und aus einem fixen Zylinder (53b), der am Rahmen (7) befestigt ist, die Kontaktflächen haben, die sich zum Austausch von Daten durch Verschiebung eignen, eine erste Reihe von Stromkabeln (52a), die sich dazu eignen, die Platine (51) mit dem Schleifring (53) zu verbinden, eine zweite Reihe von Stromkabeln (52b), die sich dazu eignen, den Schleifring (53) mit der Anzeigevorrichtung (6) zu verbinden, beinhalten.

5. Die Vorrichtung nach dem Patentanspruch 4, **gekennzeichnet dadurch, dass** sie einen Kabelkanal (8), um die zweite Reihe von Stromkabeln (52b) zu enthalten, der im Rahmen (7) unter dem Drehtisch (4) untergebracht ist, beinhaltet.

## Revendications

1. Un dispositif de pesage pour machines d'emballage de palettes à table ouverte, qui sont équipées d'un châssis fixe (7) et d'une table tournante ouverte (4), **caractérisé en ce qu'**il comprend une table flottante (1), superposable sur la table tournante ouverte (4) et mobile verticalement par rapport à celle-ci, une pluralité de cellules de charge (2) fixées à la table tournante ouverte (4), et des moyens de contrainte (3) rigides interposés entre la table flottante (1) et les cellules de charge (2), dans lequel les moyens de contrainte (3), destinés à s'assujettir dans la table flottante (1) et à être fixés aux cellules de charge (2), n'interfèrent pas avec la table tournante ouverte (4), la table tournante (4) étant dotée de trous traversants.

2. Le dispositif selon la revendication 1, **caractérisé en ce que** les moyens de contrainte (3) comprennent des vis (31).

3. Le dispositif selon la revendication 1 ou 2, **caractérisé en ce qu'**il comprend des moyens de transfert de données (5) pour transférer les données détectées par les cellules de charge (2) à un appareil d'affichage (6).

4. Le dispositif selon la revendication 3, **caractérisé en ce que** les moyens de transfert de données (5) pour transférer les données détectées par les cellules de charge (2) comprennent une carte de circuit imprimé (51), destinée à collecter les données détectées par les cellules de charge (2) et à fournir une valeur de poids de la palette, un collecteur à bague rotatif (53), composé d'un cylindre mobile (53a) fixé à la table tournante (4) et d'un cylindre fixe (53b) fixé au châssis (7) qui ont des surfaces de contact destinées à s'échanger des données par frottement, un premier ensemble de câbles électriques (52a), destinés à relier la carte (51) au collecteur à bague rotatif (53), un deuxième ensemble de câbles électriques (52b), destinés à relier le collecteur à bague rotatif (53) à l'appareil d'affichage (6).

5. Le dispositif selon la revendication 4, **caractérisé en ce qu'**il comprend un chemin de câbles (8) pour contenir le deuxième ensemble de câbles électriques (52b), logé dans le châssis (7) en dessous de la table tournante (4).
